# EUROPÄISCHE PATENTSCHRIFT

(11) **EP 4 086 516 B1**
(45) Veröffentlichungstag und Bekanntmachung des Hinweises auf die Patenterteilung: **09.10.2024**
(21) Anmeldenummer: 22164789.4
(22) Anmeldetag: 28.03.2022
(51) Int. Cl.: F23N 5/10, F23N 5/24

(54) **VERFAHREN ZUR ÜBERWACHUNG EINES BETRIEBS EINES GASBRENNERSYSTEMS UND GASBRENNERSYSTEM**
GAS BURNER SYSTEM AND METHOD FOR MONITORING THE OPERATION OF A GAS BURNER SYSTEM
PROCÉDÉ DE SURVEILLANCE D'UN FONCTIONNEMENT D'UN SYSTÈME DE BRÛLEUR À GAZ ET SYSTÈME DE BRÛLEUR À GAZ

(30) Priorität: 07.05.2021 DE 102021112034
(43) Veröffentlichungstag der Anmeldung: 09.11.2022
(73) Patentinhaber: Pilz GmbH & Co. KG, 73760 Ostfildern (DE)
(72) Erfinder: Monnee, Lambertus Pieter, 73760 Ostfildern (DE)
(74) Vertreter: Manske, Jörg

(56) Entgegenhaltungen:
- AT-A4- 510 002
- DE-A1- 10 045 270
- DE-A1- 19 734 574
- DE-A1- 19 903 305
- DE-A1- 4 037 397
- DE-U1- 202015 101 271
- GB-A- 2 444 109
- JP-A- S6 044 722

## Beschreibung

Die vorliegende Erfindung betrifft ein Verfahren zur Überwachung eines Betriebs eines Gasbrennersystems nach dem Oberbegriff des Anspruchs 1. Darüber hinaus betrifft die vorliegende Erfindung ein Gasbrennersystem nach dem Oberbegriff des Anspruchs 5.

Gasbrennersysteme, die zum Beispiel in Gasbrennwertheizvorrichtungen verwendet werden können, sind aus dem Stand der Technik in zahlreichen unterschiedlichen Ausführungsformen bekannt. Diese Gasbrennersysteme weisen einen Brenner auf, mittels dessen während des Betriebs ein Brennstoff-Luft-Gemisch verbrannt werden kann. Um den Betrieb derartiger Gasbrennersysteme überwachen zu können, ist es erforderlich, unterschiedliche Betriebsparameter des Brenners zu erfassen und auszuwerten. Hierzu gehört zum Beispiel auch eine Flammenüberwachung.

Aus dem Stand der Technik sind zum Beispiel Verfahren zur Flammenüberwachung eines Brenners auf Basis der Messung der Flammentemperatur bekannt. Derartige Verfahren nutzen zumindest ein Thermoelement, welches sich mit seinem temperatursensitiven Bereich in die Flamme hinein erstreckt. Eine bei aktiver Flamme durch die Flammentemperatur aufgrund des thermoelektrischen Effekts (Seebeck-Effekts) erzeugte elektrische Spannung ist dazu in der Lage, ein Brennstoffventil des Gasbrennersystems gegen eine mechanische Federkraft offen zu halten. Im geöffneten Zustand des Brennstoffventils kann der Brennstoff in den Brennraum des Brenners einströmen, damit die Flamme aufrechterhalten wird. Wenn die Flamme erlischt, kühlt sich das Thermoelement ab, wodurch die durch die Flammentemperatur aufgrund des thermoelektrischen Effekts erzeugte elektrische Spannung abnimmt und dann nicht mehr ausreicht, um das Brennstoffventil noch länger offen zu halten. Das Brennstoffventil wird dann durch die Wirkung der Federkraft geschlossen.

Ein derartiges Verfahren ist konstruktiv relativ einfach zu realisieren und darüber hinaus auch sehr robust. Es hat allerdings den entscheidenden Nachteil, dass das Thermoelement zusammen mit seiner Schutzummantelung beim Erlöschen der Flamme eine gewisse Zeitspanne zum Abkühlen braucht. Während dieser Zeitspanne bleibt die aufgrund des thermoelektrischen Effekts erzeugte elektrische Spannung noch hoch genug, um das Brennstoffventil weiterhin in der geöffneten Stellung zu halten. In der Praxis kann es deshalb durchaus bis zu 30 s dauern, bis sich das Brennstoffventil schließt. Deshalb ist dieses Verfahren gemäß den einschlägigen Normen nur bei halbautomatischen Brennern erlaubt, nicht jedoch bei automatischen Brennern, welche im häuslichen Bereich, insbesondere in Gasbrennwertheizvorrichtungen, und in industriellen Applikationen eingesetzt werden. Denn in den einschlägigen Normen, wie zum Beispiel in der DIN EN 298:2012-11, wird eine Schließzeit der Brennstoffventile von 1 s ab dem Erlöschen der Flamme gefordert.

Die aus dem Stand der Technik bekannten Gasbrennersysteme werden häufig mit aliphatischen Brennstoffen, wie zum Beispiel mit Erdgas, betrieben. Diese aliphatischen Brennstoffe haben jedoch den Nachteil, dass während des Verbrennungsprozesses eine nicht unerhebliche Menge an Kohlenstoffdioxid (CO₂) erzeugt wird. Um derartige Kohlenstoffdioxid-Emissionen zu verringern, sind aus dem Stand der Technik bereits Gasbrennersysteme bekannt, die so ausgebildet sind, dass sie mit einem Gemisch aus Wasserstoff und einem aliphatischen Brennstoff, insbesondere mit einem Wasserstoff-Erdgas-Gemisch, oder auch mit 100 % - abgesehen von nicht zu vermeidenden Verunreinigungen - Wasserstoff als Brennstoff betrieben werden können. Ferner weist Wasserstoff im Vergleich zu anderen Brennstoffen, wie zum Beispiel Erdöl oder Erdgas, die höchste Energiedichte auf. Die Verwendung von Wasserstoff beziehungsweise eines Wasserstoff-Erdgas-Gemischs als Brennstoff in einem Gasbrennersystem wirkt sich auf die Betriebsparameter des Brenners, wie zum Beispiel auch auf das Verbrennungsluftverhältnis λ, welches auch als Luftzahl bezeichnet wird, aus. Dieses Verbrennungsluftverhältnis λ ist definiert als Quotient aus der tatsächlich für den Verbrennungsprozess zur Verfügung stehenden Luftmasse und der mindestens notwendigen Luftmasse, welche für eine stöchiometrisch vollständige Verbrennung theoretisch erforderlich ist.

Ein Beispiel für ein Gasbrennersystem, welches mit einem Brennstoffanteil von bis zu 100 % Wasserstoff betrieben werden kann, ist aus der WO 2020/192902 A1 bekannt.

Verfahren zur Überwachung eines Betriebs eines Gasbrennersystems sowie Gasbrennersysteme der eingangs genannten Art sind zum Beispiel aus der DE 100 45 270 A1 und aus der DE 197 34 574 A1 bekannt.

Die Aufgabe der vorliegenden Erfindung besteht darin, ein Verfahren zur Überwachung eines Betriebs eines Gasbrennersystems sowie ein Gasbrennersystem zur Verfügung zu stellen, welche einen zuverlässigen und sicheren Betrieb des Gasbrennersystems ermöglichen.

Die Lösung dieser Aufgabe liefert ein Verfahren zur Überwachung eines Betriebs eines Gasbrennersystems mit den Merkmalen des Anspruchs 1. Hinsichtlich des Gasbrennersystems wird diese Aufgabe durch ein Gasbrennersystem mit den Merkmalen des Anspruchs 5 gelöst. Die Unteransprüche betreffen vorteilhafte Weiterbildungen der Erfindung.

Bei einem erfindungsgemäßen Verfahren zur Überwachung eines Betriebs eines Gasbrennersystems, wobei mittels eines Brenners während des Betriebs des Gasbrennersystems ein Brennstoff-Luft-Gemisch entflammt wird und eine Flamme erzeugt wird, ist vorgesehen, dass die Flammentemperaturmesseinrichtung durch eine Beaufschlagung mit Kühlluft aktiv gekühlt wird, wobei für eine Bereitstellung der Kühlluft für die Flammentemperaturmesseinrichtung ein Teil der dem Brenner zugeführten Prozessluft abgezweigt wird, und dass bei einem Absinken der Temperatur der Flamme unter einen kritischen Wert oder mit einem bestimmten negativen Gradienten eine Brennstoffzufuhr zum Brenner unterbrochen wird, und dass bei einer Anomalie des Verbrennungsluftverhältnisses die Brennstoffzufuhr zum Brenner unterbrochen wird.

Bei dem erfindungsgemäßen Verfahren zur Überwachung des Betriebs eines Gasbrennersystems ist somit vorgesehen, dass die Flammentemperaturmesseinrichtung, mittels derer die Temperatur der Flamme erfasst wird, durch eine erzwungene Konvektion dauerhaft aktiv mit der Kühlluft gekühlt wird. Diese Kühlluft bewegt sich dabei um die Flammentemperaturmesseinrichtung, die vorzugsweise ein oder mehrere Thermoelemente aufweist, herum und insbesondere auch in einen Bereich zwischen der Flammentemperaturmesseinrichtung und einer Schutzummantelung für diese. Die dauerhafte aktive Kühlung der Flammentemperaturmesseinrichtung mittels der Kühlluft bewirkt, dass die Flammentemperaturmesseinrichtung nach einem Erlöschen der Flamme schneller abkühlt als ohne aktive Kühlung. Dadurch wird die Reaktionszeit zwischen dem Erlöschen der Flamme und dem Schließen des Brennstoffventils zur Unterbrechung der Brennstoffzufuhr in vorteilhafter Weise wirksam verkürzt.

Zusätzlich zur Erfassung des Vorhandenseins beziehungsweise Nichtvorhandenseins oder auch des Entstehens der Flamme kann somit noch eine weitere Eigenschaft auf Basis des hier vorgestellten Prinzips der aktiven Kühlung der Flammentemperaturmesseinrichtung schnell genug gemessen werden: Dabei handelt es sich um die Luftzahl beziehungsweise das Brennstoff-Luftverhältnis, die ebenfalls wichtige Betriebsparameter des Brenners bilden.

Die Erfindung geht von der Erkenntnis aus, dass die Flammentemperatur, die mittels der aktiv gekühlten Flammentemperaturmesseinrichtung sehr schnell gemessen werden kann, ebenfalls ein Maß für die Luftzahl λ beziehungsweise das Brennstoff-Luft-Verhältnis ist. Mit der aktiv gekühlten Flammentemperaturmesseinrichtung, ist es in vorteilhafter Weise möglich, schnell genug eine Abweichung der Luftzahl beziehungsweise des Brennstoff-Luft-Verhältnisses von der optimalen Luftzahl beziehungsweise vom optimalen Brennstoff-Luft-Verhältnis in für den Verbrennungsprozess ungünstige Bereiche festzustellen und die Brennstoffzufuhr zu deaktivieren. Unter sicherheitstechnischen Aspekten wäre dieses ohne die aktive Kühlung der Flammentemperaturmesseinrichtung zu langsam.

Zu Kühlungszwecken wird gemäß der Erfindung ein Teil der Prozessluft, die zum Beispiel mittels einer Ventilationseinrichtung dem Brennraum des Brenners zugeführt wird oder mittels einer Abgasventilationseinrichtung in den Brennraum des Brenners gesaugt wird, abgezweigt und als Kühlluft zur aktiven Kühlung der Flammentemperaturmesseinrichtung genutzt. Der übrige Teil der Prozessluft bildet eine Verbrennungsluft für den Verbrennungsprozess des Brennstoffs innerhalb der Brennkammer.

Das Messsignal der Flammentemperaturmesseinrichtung wird vorzugsweise von einer fehlersicheren Eingangsbaugruppe der Auswerteeinrichtung eingelesen und insbesondere analog (d. h., über seinen Signalverlauf und nicht digital über Grenzwerte) ausgewertet. Dabei wird ein Abschaltsignal für das Brennstoffventil erzeugt, sobald ein Absinken der gemessenen Temperatur unter einen definierten Temperaturgrenzwert oder mit einem bestimmten negativen (kritischen) Gradienten oder eine Anomalie des Verbrennungsluftverhältnisses festgestellt wird. Ein Erlöschen der Flamme anhand der Flammentemperatur kann somit sowohl statisch absolut (Flammentemperatur fällt unter einem bestimmten Grenzwert) als auch dynamisch (Flammentemperatur hat einen bestimmten negativen Gradienten, der auf ein Erlöschen hindeutet) festgestellt werden. Durch die aktive Kühlung der Flammentemperaturmesseinrichtung ist eine entsprechende Senkung der Temperatur der Flamme schneller und zuverlässiger feststellbar als ohne Kühlung. Weiterhin kann in einer vorteilhaften Ausführungsform das Vorhandensein der Flamme über eine konstante hohe Temperatur und eine Entstehung der Flamme über eine ansteigende Temperatur festgestellt werden. Vorzugsweise wird in diesem Zusammenhang das Gradientenverhalten der mittels der Flammentemperaturmesseinrichtung gemessenen Temperatur der Flamme ausgewertet, um mögliche Temperaturänderungen zu erfassen. Dadurch kann sehr einfach erfasst werden, ob die Temperatur der Flamme ansteigt, absinkt oder konstant ist.

Eine Erhöhung/Absenkung der Temperatur der Prozessluft beziehungsweise der Kühlluft wird zwangsläufig zu einer Erhöhung/Absenkung der gemessenen Flammentemperatur führen. Um zu verhindern, dass eine Erhöhung/Absenkung der Temperatur der Prozessluft beziehungsweise der Kühlluft fälschlicherweise als eine entstehende/erlöschende Flamme gewertet wird, wird in einer vorteilhaften Ausführungsform zusätzlich die Temperatur der Prozessluft und somit auch der aus dieser abgezweigten Kühlluft mittels einer Lufttemperaturmesseinrichtung an einer Position gemessen, die durch die Flamme nicht beeinflusst werden kann, und mittels der Auswerteeinrichtung ausgewertet. Vorzugsweise ist die Lufttemperaturmesseinrichtung innerhalb der Luftzufuhrleitung angeordnet. Wenn mittels der Lufttemperaturmesseinrichtung ebenfalls eine Erhöhung/Absenkung der Temperatur erfasst wird, wird diese Temperaturänderung bei der Auswertung der Flammentemperatur in vorteilhafter Weise nicht berücksichtigt und von der Auswerteeinrichtung somit nicht als eine entstehende beziehungsweise erlöschende Flamme gewertet.

Ein Ausfall des Zustroms der Prozessluft wird in einer vorteilhaften Ausführungsform mittels einer Druckmesseinrichtung überwacht, die vorzugsweise innerhalb der Luftzufuhrleitung untergebracht ist. Diese Druckmesseinrichtung erfasst den Druck der Prozessluft und damit auch der Kühlluft. Wird ein Ausfall des Zustroms der Prozessluft erkannt, wird das Brennstoffventil geschlossen, so dass die Brennstoffzufuhr in den Brennraum unterbrochen wird.

Die Flammentemperaturmesseinrichtung ist so angeordnet, dass sie die Flammentemperatur misst. Da die Flammentemperatur bei einem konstanten Brennstoff-Luft-Verhältnis beziehungsweise konstanter Luftzahl und einer intakten Flamme/intakten Verbrennung des Brennstoff-Luftgemischs konstant ist, das heißt, unabhängig von der Leistung des Brenners (die bei einem modulierenden Brenner variieren kann) ist, wird eine Senkung der Brennerleistung nicht zu einer Senkung der gemessenen Temperatur führen und somit nicht zu einem Schließen des Brennstoffventils aufgrund einer nicht zutreffenden Feststellung einer erlöschenden Flamme führen.

Ein erfindungsgemäßes Gasbrennersystem zeichnet sich dadurch aus, dass das Gasbrennersystem eine Bypass-Leitung aufweist, innerhalb derer die Flammentemperaturmesseinrichtung untergebracht ist und die so angeordnet ist, dass sie von der Luftzufuhrleitung abzweigt, so dass während des Betriebs des Gasbrennersystems ein Teil der durch die Luftzufuhrleitung strömenden Prozessluft in die Bypass-Leitung abgezweigt wird und eine Kühlluft zur aktiven Kühlung der Flammentemperaturmesseinrichtung bildet, und dass die Steuerungseinrichtung dazu ausgebildet ist, bei einem Absinken der Temperatur der Flamme unter einen kritischen Wert oder einem Absinken der Temperatur mit einem bestimmten negativen Gradienten ein Abschaltsignal für das Brennstoffventil zu erzeugen, und dass die Steuerungseinrichtung dazu ausgebildet ist, bei einer Anomalie des Verbrennungsluftverhältnisses ein Abschaltsignal für das Brennstoffventil zu erzeugen.

Das erfindungsmäße Gasbrennersystem, welches auf den Erkenntnissen des oben bereits ausführlich beschriebenen Verfahrens basiert, ermöglicht einen sicheren Betrieb des Gasbrennersystems, da insbesondere ein Erlöschen der Flamme oder eine Anomalie des Verbrennungsluftverhältnisses aufgrund der aktiven Kühlung der Flammentemperaturmesseinrichtung sehr rasch erkannt werden können, so dass ein sehr schnelles Abschalten der Brennstoffzufuhr erfolgen kann.

Gemäß der Erfindung ist vorgesehen, dass das Gasbrennersystem eine Bypass-Leitung aufweist, innerhalb derer die Flammentemperaturmesseinrichtung untergebracht ist und die so angeordnet ist, dass sie von der Luftzufuhrleitung abzweigt, so dass während des Betriebs des Gasbrennersystem ein Teil der durch die Luftzufuhrleitung strömenden Prozessluft in die Bypass-Leitung abgezweigt wird und eine Kühlluft zur aktiven Kühlung der Flammentemperaturmesseinrichtung bildet. Der übrige Teil der Prozessluft, der nicht durch die Bypass-Leitung strömt, bildet die Verbrennungsluft für den Brennstoff innerhalb des Brennraums des Brenners.

In einer besonders bevorzugten Ausführungsform kann vorgesehen sein, dass innerhalb der Luftzufuhrleitung eine Lufttemperaturmesseinrichtung untergebracht ist. Mittels der Lufttemperaturmesseinrichtung kann die Temperatur der Prozessluft an einem Ort gemessen werden, der nicht von der Flammentemperatur beeinflusst wird.

In einer vorteilhaften Ausführungsform besteht die Möglichkeit, dass innerhalb der Luftzufuhrleitung eine Druckmesseinrichtung untergebracht ist. Mittels der Druckmesseinrichtung kann erfasst werden, ob die Prozessluft zur Verfügung steht.

In einer besonders vorteilhaften Ausführungsform wird vorgeschlagen, dass das Gasbrennersystem für einen Betrieb mit einem Brennstoff eingerichtet ist, der aus einem Gemisch aus einem aliphatischen Brennstoff und Wasserstoff oder bis auf natürliche Verunreinigungen ausschließlich aus Wasserstoff besteht. Grundsätzlich kann aber auch ein rein aliphatischer Brennstoff, wie zum Beispiel Erdgas, verwendet werden.

Ein Vorteil des hier beschriebenen Verfahrens sowie des Gasbrennersystems liegt insbesondere in der Einfachheit auf der Sensorebene. Denn es wird nur eine Flammentemperaturmesseinrichtung mit einem oder mehreren Thermoelementen benötigt, die typischerweise nur aus zwei zusammengeschweißten unterschiedlichen Metallen bestehen, so dass die Flammentemperaturmesseinrichtung sehr einfach und kostengünstig realisiert werden kann. Die bei der Flammenüberwachung ebenfalls üblichen optischen Sensoreinrichtungen, die zum Beispiel auf einer UV-Licht-Erfassung basieren, sind demgegenüber wesentlich komplexer ausgeführt.

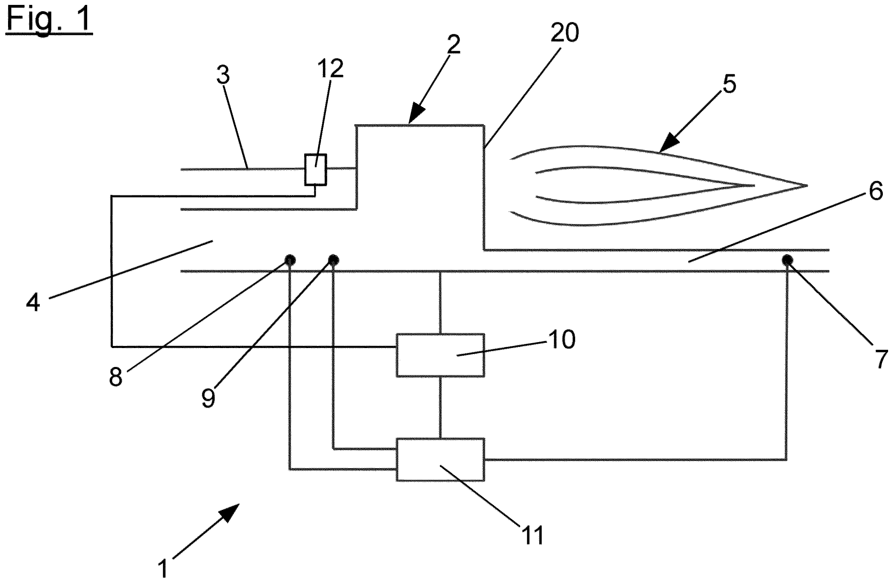

Weitere Merkmale und Vorteile von Ausführungsbeispielen der vorliegenden Erfindung werden unter Bezugnahme auf die beiliegende Fig. 1 näher erläutert, die einen grundlegenden Aufbau eines Gasbrennersystems 1 in schematisch stark vereinfachter Form zeigt. Anhand dieser Darstellung sollen nachfolgend auch Einzelheiten eines Verfahrens zur Überwachung eines Betriebs des Gasbrennersystems 1 näher erläutert werden.

Das Gasbrennersystem 1 umfasst einen Brenner 2 mit einem Brennraum 20, eine Brennstoffzufuhrleitung 3 sowie eine Luftzufuhrleitung 4, die an den Brennraum 20 des Brenners 2 angeschlossen sind. Innerhalb der Brennstoffzufuhrleitung 3 ist ein Brennstoffventil 12 untergebracht, das selektiv geöffnet und geschlossen werden kann, um die Brennstoffzufuhr in den Brennraum 20 des Brenners 2 freizugeben beziehungsweise zu beenden.

Während des Betriebs des Gasbrennersystems 1 wird über die Brennstoffzufuhrleitung 3 ein Brennstoff in den Brennraum 20 des Brenners 2 geleitet. Über die Luftzufuhrleitung 4 wird eine Prozessluft zugeführt, wobei ein Teil der Prozessluft eine Verbrennungsluft für den Verbrennungsprozess bildet und in den Brennraum 20 des Brenners 2 eingebracht wird. Dadurch wird während des Betriebs des Gasbrennersystems 1 innerhalb des Brennraums 20 des Brenners 2 ein zündfähiges Brennstoff-Luft-Gemisch erhalten und mittels einer hier nicht explizit dargestellten Zündeinrichtung entsprechend gezündet, so dass eine Flamme 5 erzeugt wird. Als Brennstoff kann zum Beispiel ein aliphatischer Brennstoff, wie zum Beispiel Erdgas, verwendet werden. Bevorzugt ist es allerdings, als Brennstoff eine Mischung aus Wasserstoff und einem aliphatischen Brennstoff, insbesondere Erdgas, zu verwenden. In einer besonders vorteilhaften Ausführungsvariante ist das Gasbrennersystem 1 so ausgeführt, dass der Brenner 2 - abgesehen von natürlichen Verunreinigungen - mit 100% Wasserstoff als Brennstoff betrieben werden kann.

Wie in Fig. 1 zu erkennen, weist das Gasbrennersystem 1 eine Bypass-Leitung 6 auf, innerhalb derer eine Flammentemperaturmesseinrichtung 7 untergebracht ist, die dazu ausgebildet ist, die Flammentemperatur der Flamme 5 zu messen. Durch die Bypass-Leitung 6 kann ein bestimmter Anteil der Prozessluft aus der Luftzufuhrleitung 4 an dem Brennraum 20 des Brenners 2 vorbeigeführt werden, so dass dieser Luftanteil nicht mehr als Verbrennungsluft zum Verbrennungsprozess des Brennstoff-LuftGemischs beiträgt, sondern als Kühlluft für eine aktive Kühlung der Flammentemperaturmesseinrichtung 7 durch erzwungene Konvektion eingesetzt werden kann. Die Verbrennungsluft kann zum Beispiel mit einem Ventilator dem Brennraum 20 des Brenners 2 zugeführt werden oder durch einen Abgasventilator in den Brennraum 20 des Brenners 2 gesaugt werden.

Innerhalb der Luftzufuhrleitung 4 sind eine Lufttemperaturmesseinrichtung 8, die dazu ausgebildet ist, die Temperatur der Prozessluft zu messen, sowie eine Druckmesseinrichtung 9, die dazu ausgebildet ist, den Luftdruck innerhalb der Luftzufuhrleitung 4 zu messen, untergebracht. Die Druckmesseinrichtung 9 ist vorzugsweise so ausgeführt, dass sie für eine analoge Druckmessung eingerichtet ist und somit nicht eine digitale Schaltschwelle erfasst, sondern stetig den Druck der Prozessluft auf analoge Weise misst.

Ferner umfasst das Gasbrennersystem 1 eine Steuerungseinrichtung 10, die dazu ausgebildet ist, den Betrieb des Gasbrennersystems 1 zu steuern und zu überwachen. Insbesondere ist die Steuerungseinrichtung 10 dazu eingerichtet, ein Freigabesignal beziehungsweise ein Abschaltsignal für das Brennstoffventil 12 zu erzeugen. Darüber hinaus ist eine Auswerteeinrichtung 11 vorgesehen, die an die Flammentemperaturmesseinrichtung 7, die Lufttemperaturmesseinrichtung 8 sowie an die Druckmesseinrichtung 9 angeschlossen ist, um die von diesen Messeinrichtungen gemessenen Daten zu empfangen und auszuwerten. Die Auswerteeinrichtung 11 ist ihrerseits an die Steuerungseinrichtung 10 angeschlossen. Wenngleich die Auswerteeinrichtung 11 und die Steuerungseinrichtung 10 vorliegend als zwei separate Einrichtungen zeichnerisch dargestellt wurden, ist es grundsätzlich möglich, deren Funktionen in eine einzige Einheit, insbesondere in die Steuerungseinrichtung 10, zu integrieren und so den Integrationsgrad zu erhöhen.

Vorliegend wird die Flammentemperaturmesseinrichtung 7 dauerhaft über eine erzwungene Konvektion mit der Kühlluft gekühlt. Hierfür wird ein Teil der ohnehin über die Luftzufuhrleitung 4 zugeführten Prozessluft, die teilweise an dem Brennraum 20 vorbei in die Bypass-Leitung 6 gelangt, als Kühlluft genutzt. Diese Kühlluft bewegt sich dabei um die Flammentemperaturmesseinrichtung 7, die vorzugsweise ein oder mehrere Thermoelemente aufweist, herum und insbesondere zwischen dieser Flammentemperaturmesseinrichtung 7 und einer Schutzummantelung hindurch. Diese dauerhafte Kühlung der Flammentemperaturmesseinrichtung 7 durch erzwungene Konvektion bewirkt, dass sich die Flammentemperaturmesseinrichtung 7 bei einem Erlöschen der Flamme 5 schneller abkühlt als ohne diese aktive Kühlung. Durch diese Maßnahme ist es in vorteilhafter Weise möglich, eine Abschaltzeit zwischen dem Erlöschen der Flamme 5 und dem Schließen des Brennstoffventils 12 signifikant zu verkürzen.

Das Messsignal der Flammentemperaturmesseinrichtung 7 wird von einer fehlersicheren Eingangsbaugruppe der Auswerteeinrichtung 11 eingelesen und mittels der Auswerteeinrichtung 11 analog (d. h., über seinen Verlauf und nicht digital über Grenzwerte) ausgewertet. Sobald eine Absenkung der gemessenen Flammentemperatur unter einen kritischen Grenzwert oder eine Absenkung der gemessenen Flammentemperatur mit einem bestimmten (kritischen) negativen Gradienten, der auf ein Erlöschen der Flamme 5 hindeutet, festgestellt wird, wird von der Steuerungseinrichtung 10 ein Abschaltsignal für das Brennstoffventil 12 erzeugt, welches bewirkt, dass sich das Brennstoffventil 12 schließt, so dass die Brennstoffzufuhr in den Brennraum 20 des Brenners 2 unterbrochen wird. Durch die aktive Kühlung der Flammentemperaturmesseinrichtung 7 ist eine entsprechende Senkung der Temperatur schneller und zuverlässiger feststellbar als ohne Kühlung. Ferner können durch die Auswertung der Messsignale der Flammentemperaturmesseinrichtung 7 eine vorhandene Flamme 5 über die Erfassung einer im Wesentlichen konstanten hohen Temperatur und eine entstehende Flamme 5 durch die Erfassung einer ansteigenden Temperatur zuverlässig festgestellt werden. Vorzugsweise wird in diesem Zusammenhang das Gradientenverhalten der mittels der Flammentemperaturmesseinrichtung 7 gemessenen Temperatur der Flamme 5 ausgewertet, um mögliche Temperaturänderungen zu erfassen. Dadurch kann sehr einfach erfasst werden, ob die Temperatur der Flamme 5 ansteigt, absinkt oder konstant ist.

Eine Erhöhung/Absenkung der Temperatur der Prozessluft wird zwangsläufig zu einer Erhöhung/Absenkung der Flammentemperatur führen. Um zu verhindern, dass eine Erhöhung/Absenkung der Temperatur der Prozessluft fälschlicherweise als entstehende/erlöschende Flamme 5 gewertet wird, wird zusätzlich die Temperatur dieser Prozessluft an einer Stelle gemessen, die durch die Flamme 5 nicht beeinflusst werden kann. Dieses erfolgt mittels der Lufttemperaturmesseinrichtung 8, die innerhalb der Luftzufuhrleitung 4 angeordnet ist. Wird mittels der Lufttemperaturmesseinrichtung 8 eine Erhöhung/Absenkung der Temperatur der Luft erfasst, wird diese Temperaturänderung bei der Auswertung der Flammentemperatur mittels der Auswerteeinrichtung 11 nicht berücksichtigt und somit nicht als eine entstehende beziehungsweise erlöschende Flamme 5 gewertet.

Entsprechendes gilt auch für den Druck der Prozessluft, der mittels der Druckmesseinrichtung 9 gemessen wird, wobei eine Druckerhöhung zu einer Reduzierung der Flammentemperatur aufgrund einer stärkeren Expansion in der Flamme 5 führt und eine Druckminderung zu einer Erhöhung der Flammentemperatur aufgrund einer geringeren Expansion in der Flamme 5 führt. Der Druck des Brennstoffs muss in diesem Zusammenhang nicht berücksichtigt werden, da in den einschlägigen Normen der Feuerungstechnik stets ein Gasdruckregler vorgeschrieben ist, der einen konstanten Gasdruck gewährleisten soll.

Andere Faktoren, die einen Einfluss auf die Flammentemperatur haben, wie zum Beispiel die Konstruktion des Brenners 2 und der Stickstoffanteil der Verbrennungsluft, können als mehr oder weniger konstant angesehen werden und müssen deshalb nicht mit einem entsprechenden verfahrenstechnischen Aufwand ausgeglichen werden.

Eine Verschlechterung (Anomalie) des Brennstoff-Luft-Verhältnisses, die zu einer Verringerung der Flammentemperatur führt, muss nicht in irgendeiner Art und Weise kompensiert werden, da diese als erlöschende Flamme 5 gewertet wird, was unter diesen Bedingungen sogar erwünscht ist, da die Brennstoffzufuhr in diesem Fall ebenfalls abgeschaltet werden muss, indem das Brennstoffventil 12 geschlossen wird. Dieses Verhalten trägt weiter zur Betriebssicherheit des Gasbrennersystems 1 bei.

Ein Ausfall der Zufuhr der Prozessluft sowie der Druck der Prozessluft werden mittels der Druckmesseinrichtung 9 innerhalb der Luftzufuhrleitung 4 überwacht. Wird ein Ausfall dieser Luftzufuhr erkannt, wird das Brennstoffventil 12 geschlossen. Dieses trägt ebenfalls zur Betriebssicherheit des Gasbrennersystems 1 bei. Wenn ein an dem Verbrennungsprozess beteiligtes Gas, wie zum Beispiel die Verbrennungsluft, bei der Verbrennung expandiert, weil es unter einem höheren Druck zugeführt wird, kann dieses aufgrund des Joule-Thomson-Effektes ebenfalls zu einer Verringerung der Flammentemperatur führen. Dieses Temperaturverhalten muss an sich nicht berücksichtigt werden, zeigt aber schon, dass Druckschwankungen der Verbrennungsluft - ähnlich wie die Temperatur der Verbrennungsluft - einen Einfluss auf die Flammentemperatur haben und deshalb bei der Flammenauswertung berücksichtigt werden müssen. Denn eine eventuelle Druckminderung könnte ebenso wie eine Temperatursteigerung der Verbrennungsluft eine erlöschende Flamme 5 verschleiern.

Die Flammentemperaturmesseinrichtung 7 muss so angebracht werden, dass sie die Temperatur der Flamme 5 zuverlässig messen kann. Da die Flammentemperatur bei einem konstanten Brennstoff-Luft-Verhältnis beziehungsweise konstanter Luftzahl und einer intakten Flamme 5/regulären Verbrennung konstant ist, d. h., unabhängig von der Leistung des Brenners 2 ist, die bei einem modulierenden Brenner 2 durchaus variieren kann, wird eine Senkung der Brennerleistung nicht zu einer Senkung der gemessenen Temperatur führen und somit auch nicht zu einem Schließen des Brennstoffventils 12 aufgrund einer nicht zutreffenden Feststellung einer erlöschenden Flamme 5 führen.

Der Vorteil der hier beschriebenen Lösung liegt insbesondere in der Einfachheit auf der Sensorebene. Denn es wird nur eine Flammentemperaturmesseinrichtung 7 mit einem oder mehreren Thermoelementen benötigt, die typischerweise nur aus zwei zusammengeschweißten unterschiedlichen Metallen bestehen, so dass die Flammentemperaturmesseinrichtung 7 sehr einfach und kostengünstig realisiert werden kann.

Die Flammenüberwachung des Gasbrennersystems 1 gemäß dem hier vorgestellten Verfahren kann zum Beispiel folgendermaßen erfolgen:
Zustand 1: Der Brenner 2 ist ausgeschaltet. Die Messdaten der Lufttemperaturmesseinrichtung 8 sowie der Flammentemperaturmesseinrichtung 7 werden nicht ausgewertet.
Zustand 2: Der Brenner 2 wird aktiviert. Zunächst ist eine Vorbelüftung im Gange. Aufgrund des zugeführten Luftstroms nehmen die Lufttemperaturmesseinrichtung 8 und die Flammentemperaturmesseinrichtung 7 beide die Temperatur der über die Luftzufuhrleitung zugeführten Prozessluft an. Zur Erhöhung der Fehlererkennungsmöglichkeiten werden beide gemessenen Temperaturen vorzugsweise von der Auswerteeinrichtung 11 im Hinblick auf ihre Plausibilität überwacht.
Zustand 3: Der Brenner 2 wird gezündet und das Brennstoff-Luft-Gemisch wird entflammt, so dass die Flamme 5 entsteht. Ein Anstieg der Flammentemperatur, der mittels der Flammentemperaturmesseinrichtung 7 gemessen wird, wird als entstehende Flamme 5 gewertet. Bis zum Ablauf einer definierten Sicherheitszeit für die Zündung muss eine bestimmte Flammentemperatur erreicht worden sein. Wenn nicht, wird der Brenner 2 abgeschaltet, indem die Brennstoffzufuhr zum Brenner 2 durch Schließen des Brennstoffventils 12 unterbrochen wird.
Zustand 4: Der Brenner 2 ist gezündet, die Flamme 5 muss sich jedoch noch stabilisieren. Die Flammentemperatur, die mittels der Flammentemperaturmesseinrichtung 7 gemessen wird, darf auf einem hohen Niveau noch leicht variieren. Nach einer bestimmten Zeit muss die Flammentemperatur allerdings stabil auf einem hohen Niveau sein. Wenn nicht, wird der Brenner 2 abgeschaltet, indem die Brennstoffzufuhr durch Schließen des Brennstoffventils 12 unterbrochen wird.
Zustand 5: Der Brenner 2 ist in Betrieb, die Flamme 5 ist stabil. Eine Senkung der Flammentemperatur, die mittels der Flammentemperaturmesseinrichtung 7 gemessen wird, wird als erlöschende Flamme 5 gewertet. Der Brenner 2 wird abgeschaltet, indem die Brennstoffzufuhr durch Schließen des Brennstoffventils 12 unterbrochen wird. Eine Senkung der Flammentemperatur kann ebenfalls durch eine steigende oder fallende Luftzahl verursacht werden. Die hier beschriebene Überwachung der Flammentemperatur kann diesen Effekt zwar nicht von einer erlöschenden Flamme 5 unterscheiden. Dieses ist aber nicht kritisch, sondern sogar gewünscht, da eine steigende oder fallende Luftzahl ebenfalls zu potenziell gefährlichen Situationen während des Betriebs des Brenners 2 führen kann. Wenn eine Anomalie der Luftzahl festgestellt wird, wird der Brenner 2 abgeschaltet, indem die Brennstoffzufuhr durch Schließen des Brennstoffventils 12 unterbrochen wird.

## Patentansprüche

1. Verfahren zur Überwachung eines Betriebs eines Gasbrennersystems (1), wobei mittels eines Brenners (2) während des Betriebs des Gasbrennersystems (1) ein Brennstoff-Luft-Gemisch entflammt wird und eine Flamme (5) erzeugt wird, wobei die Temperatur der Flamme (5) mittels einer Flammentemperaturmesseinrichtung (7) gemessen wird und mittels einer Auswerteeinrichtung (11) ausgewertet wird, wobei aus der Temperatur der Flamme (5) ein Verbrennungsluftverhältnis bestimmt wird, **dadurch gekennzeichnet, dass** die Flammentemperaturmesseinrichtung (7) durch eine Beaufschlagung mit Kühlluft aktiv gekühlt wird, wobei für eine Bereitstellung der Kühlluft für die Flammentemperaturmesseinrichtung (7) ein Teil der dem Brenner (2) zugeführten Prozessluft abgezweigt wird, und dass bei einem Absinken der Temperatur der Flamme (5) unter einen kritischen Wert oder mit einem bestimmten negativen Gradienten eine Brennstoffzufuhr zum Brenner (2) unterbrochen wird, und dass bei einer Anomalie des Verbrennungsluftverhältnisses die Brennstoffzufuhr zum Brenner (2) unterbrochen wird.

2. Verfahren nach Anspruch 1, **dadurch gekennzeichnet, dass** ein Gradientenverhalten der Temperatur der Flamme (5) ausgewertet wird.

3. Verfahren nach einem der Ansprüche 1 oder 2, **dadurch gekennzeichnet, dass** die Temperatur der Kühlluft mittels einer Lufttemperaturmesseinrichtung (8) an einer Position außerhalb eines Temperatureinflussbereichs der Flamme (5) gemessen wird und mittels der Auswerteeinrichtung (11) ausgewertet wird.

4. Verfahren nach einem der Ansprüche 1 bis 3, **dadurch gekennzeichnet, dass** der Druck der Kühlluft mittels einer Druckmesseinrichtung (9) erfasst wird und mittels der Auswerteeinrichtung (11) ausgewertet wird.

5. Gasbrennersystem (1), umfassend
- einen Brenner (2) mit einem Brennraum (20),
- eine Brennstoffzufuhrleitung (3) sowie eine Luftzufuhrleitung (4), die an den Brennraum (20) des Brenners (2) angeschlossen sind,
- mindestens ein Brennstoffventil (12), das innerhalb der Brennstoffzufuhrleitung (3) untergebracht ist und selektiv geöffnet und geschlossen werden kann, um die Brennstoffzufuhr in den Brennraum (20) des Brenners (2) freizugeben und zu beenden,
- eine Steuerungseinrichtung (10), mittels derer der Betrieb des Gasbrennersystems (1) steuerbar ist,
- eine Flammentemperaturmesseinrichtung (7), die dazu ausgebildet ist, die Temperatur der Flamme (5) zu messen,
- eine Auswerteeinrichtung (11), die dazu ausgebildet ist, Temperaturmessdaten der Flammentemperaturmesseinrichtung (7) auszuwerten und die Ergebnisse der Auswertung zur Steuerungseinrichtung (10) zu übertragen,
wobei die Auswerteeinrichtung (11) dazu ausgebildet ist, aus der Temperatur der Flamme (5) ein Verbrennungsluftverhältnis zu bestimmen, **dadurch gekennzeichnet, dass** das Gasbrennersystem (1) eine Bypass-Leitung (6) aufweist, innerhalb derer die Flammentemperaturmesseinrichtung (7) untergebracht ist und die so angeordnet ist, dass sie von der Luftzufuhrleitung (4) abzweigt, so dass während des Betriebs des Gasbrennersystems (1) ein Teil der durch die Luftzufuhrleitung (4) strömenden Prozessluft in die Bypass-Leitung abgezweigt wird und eine Kühlluft zur aktiven Kühlung der Flammentemperaturmesseinrichtung (7) bildet, und dass die Steuerungseinrichtung (10) dazu ausgebildet ist, bei einem Absinken der Temperatur der Flamme (5) unter einen kritischen Wert oder einem Absinken der Temperatur mit einem bestimmten negativen Gradienten ein Abschaltsignal für das Brennstoffventil (12) zu erzeugen, und dass die Steuerungseinrichtung (10) dazu ausgebildet ist, bei einer Anomalie des Verbrennungsluftverhältnisses ein Abschaltsignal für das Brennstoffventil (12) zu erzeugen.

6. Gasbrennersystem (1) nach Anspruch 5, **dadurch gekennzeichnet, dass** innerhalb der Luftzufuhrleitung (4) eine Lufttemperaturmesseinrichtung (8) untergebracht ist.

7. Gasbrennersystem (1) nach einem der Ansprüche 5 oder 6, **dadurch gekennzeichnet, dass** innerhalb der Luftzufuhrleitung (4) eine Druckmesseinrichtung (8) untergebracht ist.

8. Gasbrennersystem (1) nach einem der Ansprüche 5 bis 7, **dadurch gekennzeichnet, dass** das Gasbrennersystem (1) für einen Betrieb mit einem Brennstoff eingerichtet ist, der aus einem Gemisch aus einem aliphatischen Brennstoff und Wasserstoff oder bis auf natürliche Verunreinigungen ausschließlich aus Wasserstoff besteht.

## Claims

1. Method for monitoring an operation of a gas burner system (1), wherein by means of a burner (2) during the operation of the gas burner system (1) a fuel-air mixture is ignited and a flame (5) is generated, wherein the temperature of the flame (5) is measured by means of a flame temperature measurement apparatus (7) and is evaluated by means of an evaluation apparatus (11), wherein from the temperature of the flame (5) a combustion air ratio is specified, **characterised in that** the flame temperature measurement apparatus (7) is actively cooled with the application of cooling air, wherein for a provision of the cooling air for the flame temperature measurement apparatus (7) a part of the process air supplied to the burner (2) is branched off, and that a fuel supply to the burner (2) is interrupted when the temperature of the flame (5) drops below a critical value or with a specific negative gradient, and that in the case of an anomaly of the combustion air ratio, the supply of fuel to the burner (2) is interrupted.

2. Method according to claim 1, **characterised in that** a gradient behaviour of the temperature of the flame (5) is evaluated.

3. Method according to any one of claims 1 or 2, **characterised in that** the temperature of the cooling air is measured by means of an air temperature measurement apparatus (8) at a position externally to a temperature influence region of the flame (5) and is evaluated by means of the evaluation apparatus (11).

4. Method according to any one of claims 1 to 3, **characterised in that** the pressure of the cooling air is detected by means of a pressure measurement apparatus (9) and is evaluated by means of the evaluation apparatus (11).

5. Gas burner system (1), comprising
- a burner (2) having a combustion chamber (20),
- a fuel supply line (3) and an air supply line (4) which are connected to the combustion chamber (20) of the burner (2),
- at least one fuel valve (12) which is accommodated within the fuel supply line (3) and can be selectively opened and closed in order to release and stop the supply of fuel into the combustion chamber (20) of the burner (2),
- a control apparatus (10) by means of which the operation of the gas burner system (1) can be controlled,
- a flame temperature measurement apparatus (7) which is designed to measure the temperature of the flame (5),
- an evaluation apparatus (11) which is designed to evaluate temperature measurement data of the flame temperature measurement apparatus (7) and to transfer the results of the evaluation to the control apparatus (10), wherein the evaluation apparatus (11) is designed to specify a combustion air ratio from the temperature of the flame (5), **characterised in that** the gas burner system (1) has a bypass line (6) within which the flame temperature measurement apparatus (7) is accommodated and which is arranged such that it branches off from the air supply line (4) such that during the operation of the gas burner system (1) a part of the process air flowing through the air supply line (4) is branched off into the bypass line and forms a cooling air for the active cooling of the flame temperature measurement apparatus (7), and that the control apparatus (10) is designed, if the temperature of the flame (5) drops below a critical value or if the temperature drops with a specific negative gradient, to generate a switch-off signal for the fuel valve (12), and that the control apparatus (10) is designed to generate a switch-off signal for the fuel valve (12) in the case of an anomaly in the combustion air ratio.

6. Gas burner system (1) accordingto claim 5, **characterised in that** an air temperature measurement apparatus (8) is accommodated within the air supply line (4).

7. Gas burner system (1) according to any one of claims 5 or 6, **characterised in that** a pressure measurement apparatus (8) is accommodated within the air supply line (4).

8. Gas burner system (1) according to any one of claims 5 to 7, **characterised in that** the gas burner system (1) is configured for an operation with a fuel which consists of a mixture of an aliphatic fuel and hydrogen or, with the exception of natural impurities, exclusively of hydrogen.

## Revendications

1. Procédé de surveillance d'un fonctionnement d'un système de brûleur à gaz (1), dans lequel un mélange combustible-air est enflammé au moyen d'un brûleur (2) pendant le fonctionnement du système de brûleur à gaz (1) et une flamme (5) est générée, dans lequel la température de la flamme (5) est mesurée au moyen d'un appareil de mesure de température de flamme (7) et est évaluée au moyen d'un appareil d'évaluation (11), dans lequel un rapport d'air de combustion est déterminé à partir de la température de la flamme (5), **caractérisé en ce que** l'appareil de mesure de température de flamme (7) est refroidi activement par une sollicitation avec de l'air de refroidissement, dans lequel une partie de l'air de processus amené au brûleur (2) est dérivée pour une mise à disposition de l'air de refroidissement pour l'appareil de mesure de température de flamme (7), et **en ce que** lorsque la température de la flamme (5) chute sous une valeur critique ou avec un gradient négatif déterminé, une alimentation en combustible vers le brûleur (2) est interrompue, et **en ce qu'**en cas d'une anomalie du rapport d'air de combustion, l'alimentation en combustible vers le brûleur (2) est interrompue.

2. Procédé selon la revendication 1, **caractérisé en ce qu'**un comportement de gradient de la température de la flamme (5) est évalué.

3. Procédé selon l'une quelconque des revendications 1 ou 2, **caractérisé en ce que** la température de l'air de refroidissement est mesurée au moyen d'un appareil de mesure de température de l'air (8) à une position hors d'une zone d'influence de température de la flamme (5) et est évaluée au moyen de l'appareil d'évaluation (11).

4. Procédé selon l'une quelconque des revendications 1 à 3, **caractérisé en ce que** la pression de l'air de refroidissement est détectée au moyen d'un appareil de mesure de pression (9) et est évaluée au moyen de l'appareil d'évaluation (11).

5. Système de brûleur à gaz (1), comprenant
- un brûleur (2) avec une chambre de combustion (20),
- une conduite d'alimentation en combustible (3) ainsi qu'une conduite d'alimentation en air (4) qui sont raccordées à la chambre de combustion (20) du brûleur (2),
- au moins une vanne de combustible (12) qui est logée au sein de la conduite d'alimentation en combustible (3) et peut être ouverte et fermée sélectivement pour libérer et arrêter l'alimentation en combustible dans la chambre de combustion (20) du brûleur (2),
- un appareil de commande (10) au moyen duquel le fonctionnement du système de brûleur à gaz (1) peut être commandé,
- un appareil de mesure de température de flamme (7) qui est conçu pour mesurer la température de la flamme (5),
- un appareil d'évaluation (11) qui est conçu pour évaluer des données de mesure de température de l'appareil de mesure de température de flamme (7) et transmettre les résultats de l'évaluation à l'appareil de commande (10), dans lequel l'appareil d'évaluation (11) est conçu pour déterminer un rapport d'air de combustion à partir de la température de la flamme (5), **caractérisé en ce que** le système de brûleur à gaz (1) présente une conduite de dérivation (6) au sein de laquelle l'appareil de mesure de température de flamme (7) est logé et qui est disposée de sorte qu'elle est dérivée de la conduite d'alimentation en air (4), de sorte que pendant le fonctionnement du système de brûleur à gaz (1), une partie de l'air de processus circulant à travers la conduite d'alimentation en air (4) est dérivée dans la conduite de dérivation et forme un air de refroidissement pour le refroidissement actif de l'appareil de mesure de température de flamme (7), et **en ce que** l'appareil de commande (10) est conçu pour, lorsque la température de la flamme (5) chute sous une valeur critique ou lorsque la température chute avec un gradient négatif déterminé, générer un signal de désactivation pour la vanne de combustible (12), et **en ce que** l'appareil de commande (10) est conçu pour, en cas d'une anomalie du rapport d'air de combustion, générer un signal de désactivation pour la vanne de combustible (12).

6. Système de brûleur à gaz (1) selon la revendication 5, **caractérisé en ce qu'**un appareil de mesure de température de l'air (8) est logé au sein de la conduite d'alimentation en air (4).

7. Système de brûleur à gaz (1) selon l'une quelconque des revendications 5 ou 6, **caractérisé en ce qu'**un appareil de mesure de pression (8) est logé au sein de la conduite d'alimentation en air (4).

8. Système de brûleur à gaz (1) selon l'une quelconque des revendications 5 à 7, **caractérisé en ce que** le système de brûleur à gaz (1) est configuré pour fonctionner avec un combustible qui est constitué d'un mélange d'un combustible aliphatique et d'hydrogène ou, outre des impuretés naturelles, exclusivement d'hydrogène.
